# EUROPÄISCHE PATENTSCHRIFT

(11) **EP 2 494 884 B1**
(45) Veröffentlichungstag und Bekanntmachung des Hinweises auf die Patenterteilung: **21.10.2015**
(21) Anmeldenummer: 12157947.8
(22) Anmeldetag: 02.03.2012
(51) Int. Cl.: A45C 13/26, A61C 19/02

(54) **Behälter zum Aufbewahren und Transportieren von zahnärztlichen Abformungen, Modellen u. dgl.**
Container for storing and transporting dental casts, models, etc.
Boîte destinée au stockage et au transport d'empreintes dentaires, de modèles et autres.

(30) Priorität: 04.03.2011 DE 202011003568 U
(43) Veröffentlichungstag der Anmeldung: 05.09.2012
(73) Patentinhaber: Speiko - Dr. Speier GmbH, 48155 Münster (DE)
(72) Erfinder: Kreutzer, Stefan, 48165 Münster (DE)
(74) Vertreter: Patentanwälte Dörner & Kötter PartG mbB

(56) Entgegenhaltungen:
- DE-A1- 3 302 983
- US-A- 2 717 171

## Beschreibung

Die Erfindung betrifft einen Behälter zum Aufbewahren und Transportieren von zahnärztlichen Abformungen, Modellen, bestehend aus einem Unterteil, einem Deckel und Verschlussklemmen, wobei der Behälter mit dem Deckel verschließbar ist und mit den Verschlussklemmen an dem Unterteil arretierbar ist.

Behälter der eingangs genannten Art sind an sich bekannt (vgl. bspw. Container Art. Nr. 1340 der SPEIKO - Dr. Speier GmbH). Mit ihnen werden zahnärztliche Modelle und Abformungen vom Zahnarzt zu dem jeweiligen Dentallabor und umgekehrt transportiert. Die Behälter sind in verschiedenen Größen verfügbar. Somit besteht die Möglichkeit, auch mehrere Modelle und Abformungen in einem Behälter zu transportieren. Zur beschädigungsfreien Anordnung der Modelle und Abformungen sind genoppte Schaumstoffmatten und -tücher vorhanden, zwischen denen die Modelle und Abformungen angeordnet werden.

Zwar erfüllen die bekannten Behälter die an sie gestellten Anforderungen; sie weisen jedoch den Nachteil auf, dass der Transport der Behälter selbst umständlich ist. Dies hat seine Ursache darin, dass die Behälter ohne jede Tragemöglichkeit ausgestattet sind. In Folge dessen können die Behälter lediglich auf einer Handfläche oder mit zwei Händen transportiert werden, was sich als unpraktisch herausgestellt hat. Zudem besteht auf diese Weise das Risiko, dass insbesondere beim Transport von mehreren Behältern diese zu Boden fallen können und darin angeordneten Modelle und Abformungen beschädigt werden. Ein Behälter mit einem Tragegriff ist aus der US 2 717 171 A bekannt; ein Träger mit Handgriff für Behälter ist in der DE 33 02 983 A1 beschrieben.

Der Erfindung liegt die Aufgabe zugrunde, einen Behälter zum Aufbewahren und Transportieren von zahlärztlichen Abformungen, Modellen und dergleichen zu schaffen, der einfach und zuverlässig zu transportieren ist. Gemäß der Erfindung wird diese Aufgabe dadurch gelöst, dass an den Verschlussklemmen Tragegriffe anklemmbar sind, und dass die Tragegriffe aus einer Tragestange bestehen, an der mindestens zwei Profile vorgesehen sind, die teleskopartig längenveränderbar sind, wobei an den den Tragestangen abgewandten Enden der Profile eine Befestigung in Form eines Rundstabs vorgesehen ist, der in montiertem Zustand nach Passieren eines Spaltes an den Verschlussklemmen befestigt ist, und dass die Tragestangen einen halbkreisförmigen Querschnitt aufweisen und nach Verschwenken der Tragegriffe um die Kombination von Befestigung und Spalt die Tragegriffe zur Anlage mit dem Deckel kommen und die Tragestangen ineinander greifen

Mit der Erfindung ist ein Behälter zum Aufbewahren und Transportieren von zahnärztlichen Abformungen, Modellen und dergleichen geschaffen, der einfach zu transportieren ist. Durch die Anklemmbarkeit von Tragegriffen ist die Handhabung wesentlich vereinfacht. Zudem besteht die Möglichkeit, die Griffe problemlos zu entfernen, soweit dies gewünscht ist. Durch das Vorsehen einer Tragestange ist zudem ein großflächiger Griff hervorgerufen, der die Handhabung zusätzlich vereinfacht. Der halbkreisförmige Querschnitt führt darüber hinaus einerseits zu einem angenehmen Tragegefühl, können zwei benachbart zueinander vorgesehene Tragestangen platzsparend ineinander greifen. Außerdem ruft die teleskopartige Ausbildung der Profile eine zusätzliche Verbesserung bei der Handhabung hervor. Durch Anfassen der Haltestangen werden die Profile auseinander gezogen, so dass zwischen Tragestange und Behälter ein vergrößerter Abstand auftritt, der eine Vereinfachung beim Tragen und Greifen hervorruft.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Fig. 1: die perspektivische Ansicht eines Behälters ohne Deckel und abgeklappten Tragegriffen;
- Fig. 2: die perspektivische Darstellung des in Figur 1 dargestellten Behälters mit Deckel und flach auf dem Deckel aufliegenden Tragegriffen;
- Fig. 3: die perspektivische Darstellung des in Figur 1 dargestellten Behälters mit Deckel und Tragegriffen in Transportposition.

Der als Ausführungsbeispiel gewählte Behälter zum Aufbewahren und Transportieren von zahnärztlichen Abformungen, Modellen und dergleichen ist aus Kunststoff hergestellt. Es besteht die Möglichkeit, den Behälter aus gefärbten Kunststoffen herzustellen oder auch zu lackieren. Zudem besteht die Möglichkeit, den Behälter mit Aufschriften und dergleichen zu versehen.

Der Behälter besteht aus einem Unterteil 1, das mit einem Deckel 2 verschließbar ist. Der Deckel 2 ist mit Verschlussklemmen 3 an dem Unterteil 1 arretierbar. An den Verschlussklemmen 3 sind Tragegriffe 4 anklemmbar.

Das Unterteil 1 hat eine im Wesentlichen rechteckige Grundform. Es besteht aus vier zu einander rechtwinkelig ausgerichteten Seitenwänden, von denen die Wände 11 die Längsseiten und die Wände 12 die Stirnseiten bilden. Das Unterteil 1 ist von einem Boden 13 verschlossen, von dem aus sich die Seitenwände 11 und 12 im Wesentlichen senkrecht erstrecken. An dem dem Boden 13 abgewandten Ende ist das Unterteil 1 mit einem umlaufenden Rand 14 versehen. An den die Längsseiten bildenden Wänden 11 sind jeweils zwei Aufnahmen 15 angeordnet.

Der Deckel 2 weist ebenfalls eine rechteckige Grundform auf. Die Abmessungen des Deckels 2 entsprechen den Abmessungen des Unterteils 1 im Bereich des Randes 14. In verschlossenem Zustand des Behälters übergreift der Deckel 2 das Unterteil 1, wobei eine an dem Deckel 2 umlaufende Schürze 21 mit dem Rand 14 in Kontakt tritt und einen bündigen Abschluss auf der Außenseite des Behälters herbeiführt. Auf der Ansichtseite ist der Deckel 2 entlang des Umfangs des Deckels mit einer umlaufenden Sicke 22 versehen. Die Sicke 22 ist im Bereich der Längsseiten von Aussparungen 23 unterbrochen, wobei jeweils zwei Aussparungen 23 an einer Längsseite vorgesehen sind. Die Aussparungen 23 befinden sich in den Bereichen, in denen die Aufnahmen 15 an den Seitenwänden 11 angeordnet sind.

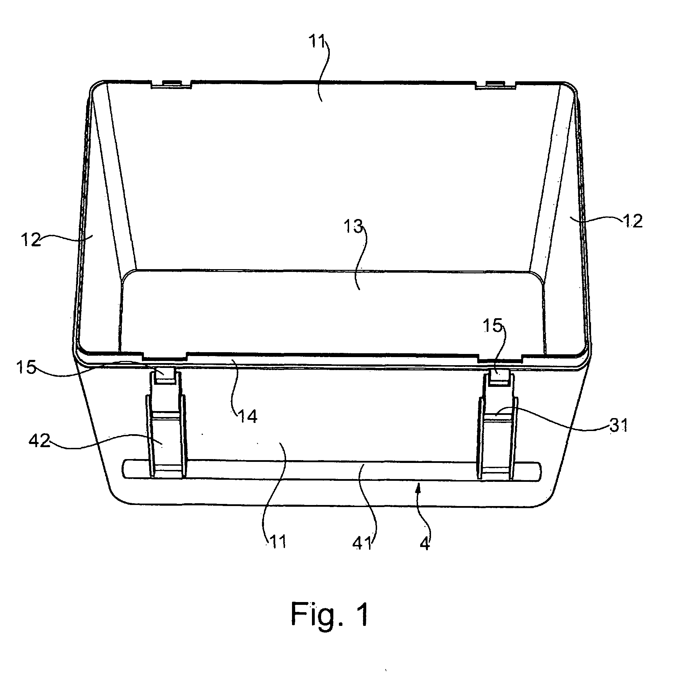

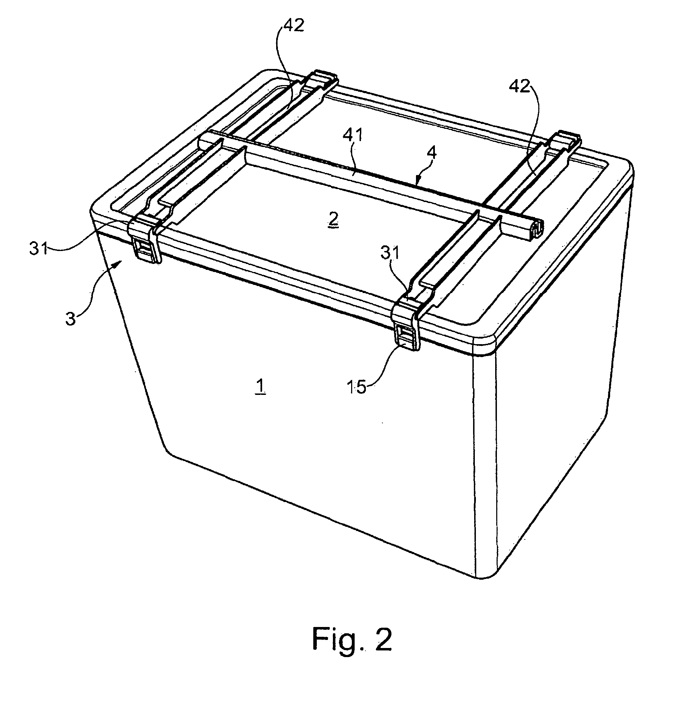

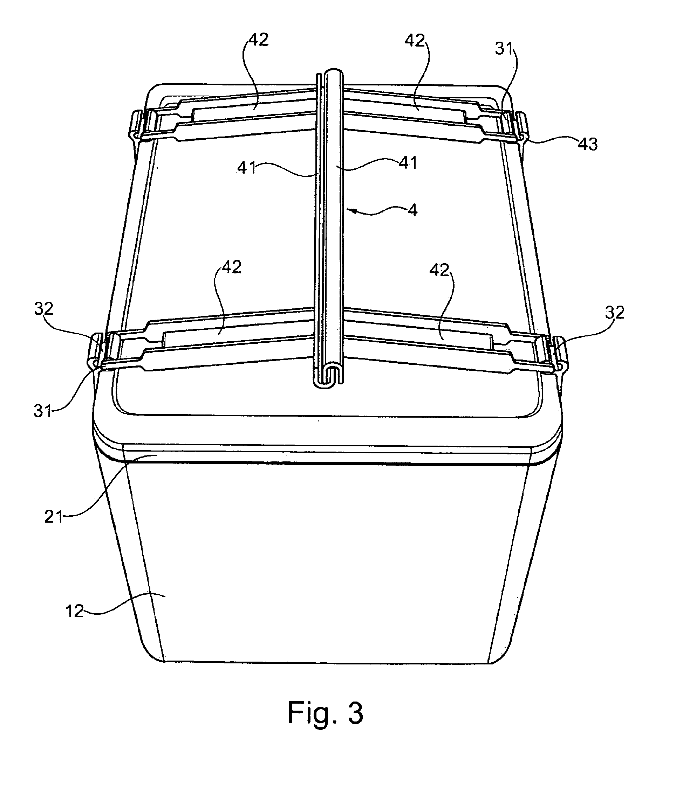

Die Verschlussklemmen 3 sind an den Aufnahmen 15 des Unterteils 1 anklemmbar. Sie sind somit im Bereich der Aussparungen 23 des Deckels 2 vorgesehen. Die Verschlussklemmen 3 sind mit ihrem dem Boden 13 zugewandten Ende in die Aufnahmen 15 eingesteckt. Die Kombination der Verschlussklemmen 3 mit den Aufnahmen 15 ermöglicht ein Verschwenken der Klemmen 3 um 180°, wie dies der Vergleich zwischen den Figuren 1 und 2 deutlich macht. Die Verschlussklemmen 3 weisen an ihren den Aufnahmen 15 abgewandten Enden einen Klemmkörper 31 auf, der in verschlossenem Zustand des Deckels 2 im Bereich der Aussparungen 23 die Sicke 22 übergreift, wie dies in den Figuren 2 und 3 ersichtlich ist. Benachbart zum Klemmkörper 31 ist an den Verschlussklemmen 3 ein Spalt 32 ausgebildet, der zur Befestigung des Tragegriffs 4 dient.

Die Tragegriffe 4 bestehen aus einer Tragestange 41, an der mindestens zwei Profile 42 vorgesehen sind. Die Tragestangen 41 haben einen halbkreisförmigen Querschnitt (Fig. 3). Die Profile 42 sind teleskopartig ausgebildet. Sie weisen eine Führung auf, in der ein Schiebeteil beweglich angeordnet ist. An dem der Tragestange 41 abgewandten Ende der Profile 42 ist eine Befestigung 43 in Form eines Rundstabs vorgesehen, der in montiertem Zustand nach Passieren des Spaltes 32 an den Verschlussklemmen 3 befestigt ist. Hierdurch ist eine zuverlässige Anordnung des Tragegriffs 4 an den Verschlussklemmen 3 bei gleichzeitiger Schwenkbarkeit um 270° hervorgerufen.

Der erfindungsgemäße Behälter ist in einfacher Weise mit dem Deckel 2 verschließbar, in dem dieser auf die geöffnete Seite des Unterteils 1 aufgesetzt wird. Die Schürze 21 übergreift in diesem Zustand den Rand 14 des Unterteils 1, sodass ein bündiger Abschluss vorgesehen ist. In dieser Position sind die Tragegriffe 4 senkrecht nach unten hängend an den Seitenwänden 11 angeordnet, wie dies in Figur 1 dargestellt ist. Nach Aufsetzen des Deckels 2 werden die Verschlussklemmen 3 nach oben verschwenkt, sodass die Klemmkörper 31 im Bereich der Aussparungen 23 über die Sicke 22 gedrückt werden. Nach Passieren der Aussparungen 23 ist der Deckel 2 auf dem Unterteil 1 arretiert. Durch weiteres Verschwenken der Tragegriffe 4 um die Kombination von Befestigung 43 und Spalt 32 in den Verschlussklemmen 3 kommen die Tragegriffe 4 zur Anlage mit dem Deckel 2, wie diese im Ausführungsbeispiel nach Figur 2 dargestellt ist. Durch die jeweils halbkreisförmige Ausbildung der Tragestangen 41 greifen die beiden Tragestangen 41 ineinander, wodurch eine platzsparende Anordnung vorgesehen ist. Beim Tragen des erfindungsgemäßen Behälters fasst der jeweilige Benutzer lediglich unter die ineinander greifenden Tragestangen 41 und hebt diese leicht an. Durch die teleskopartige Ausbildung des Tragegriffs 4 besteht die Möglichkeit, die Tragestangen 41 in einen gewissen Abstand zum Deckel 2 zu bringen, so dass ein Hindurchgreifen zwischen Tragestangen 41 und Deckel 2 problemlos möglich ist. Hierdurch ist eine sichere und zugleich einfache und komfortable Handhabung möglich.

Zum Öffnen des Behälters erfolgen die vorgenannten Schritte in umgekehrter Reihenfolge. Nach Absetzen des Behälters werden die Tragegriffe 4 in ihre vertikale Position im Bereich der Seitenwände 1 zurückgeschwenkt. Durch Zurückziehen der Verschlussklemmen 3 wird der Deckel 2 freigegeben, sodass dieser abnehmbar ist. In geöffnetem Zustand hat der Behälter die Position, wie sie in Figur 1 dargestellt ist.

## Patentansprüche

1. Behälter zum Aufbewahren und Transportieren von zahnärztlichen Abformungen, Modellen, bestehend aus einem Unterteil (1), einem Deckel (2) und Verschlussklemmen (3), wobei der Behälter mit dem Deckel (2) verschließbar ist und mit den Verschlussklemmen (3) an dem Unterteil (1) arretierbar ist, wobei an den Verschlussklemmen (3) Tragegriffe (4) anklemmbar sind, und, wobei die Tragegriffe (4) aus einer Tragestange (41) bestehen, an der mindestens zwei Profile (42) vorgesehen sind, die teleskopartig längenveränderbar sind, wobei an den den Tragestangen (41) abgewandten Enden der Profile (42) eine Befestigung (43) in Form eines Rundstabs vorgesehen ist, der in montiertem Zustand nach Passieren eines Spaltes (32) an den Verschlussklemmen (3) befestigt ist, und, wobei die Tragestangen (41) einen halbkreisförmigen Querschnitt aufweisen und nach Verschwenken der Tragegriffe (4) um die Kombination von Befestigung (43) und Spalt (32) die Tragegriffe (4) zur Anlage mit dem Deckel (2) kommen und die Tragestangen (41) ineinander greifen.

## Claims

1. Container for storing and transporting dental casts, models, consisting of a bottom part (1), a lid (2) and locking clips (3), wherein the container is closable with the lid (2) and is lockable at the bottom part (1) by means of the locking clips (3), wherein handles (4) are attachable to the locking clips (3) and wherein the handles (4) consist of a bar (41), at which at least two profiles (42) are provided, which are telescopically modifiable in length, wherein at the ends of the profiles (42) facing away from the bars (41) a mounting (43) in the shape of a round bar is provided, which is attached to the locking clips (3) in a mounted state after passing a gap (32), and wherein the bars (41) have a semicircular cross-section and after swivelling of the handles (4) about the combination of mounting (43) and gap (32) the handles (4) make contact with the lid (2) and the bars (41) engage.

## Revendications

1. Boîte destinée au stockage et au transport d'empreintes dentaires, modèles et autres, composée d'une partie inférieure (1), d'un couvercle (2) et de brides d'obturation (3), sachant que le récipient est obturable avec le couvercle (2) et immobilisable avec les brides d'obturation (3) contre la partie inférieure (1), sachant que des poignées de transport (4) peuvent être bridées contre les brides d'obturation (3) et sachant que les poignées (4) se composent d'une barre de transport (41) contre laquelle sont prévus au moins deux profilés (42) télescopiques variables en longueur,
sachant que contre les extrémités des profilés (42) ne regardant pas les barres de transport (41) est prévue une fixation (43) sous forme de barre ronde qui, à l'état monté, est fixée contre les brides d'obturation (3) après avoir franchi une fente (32), et sachant que les barres de transport (41) présentent une section semi-circulaire et que, après avoir fait pivoter les poignées de transport (4) autour de la combinaison fixation (43) plus fente (32), les poignées de transport (4) viennent appliquer contre le couvercle (2) et les barres de transport (41) engrènent l'une dans l'autre.
